Europäisches Patentamt

European Patent Office

Office européen des brevets

(11) Veröffentlichungsnummer: **0 297 392**
**A2**

(12) **EUROPÄISCHE PATENTANMELDUNG**

(21) Anmeldenummer: 88109830.5

(22) Anmeldetag: 21.06.88

(51) Int. Cl.⁴: **C01G 49/00**

(30) Priorität: 01.07.87 DE 3721767

(43) Veröffentlichungstag der Anmeldung:
04.01.89 Patentblatt 89/01

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Meisen, Ulrich, Dr.**
**Breslauerstrasse 31**
**D-4150 Krefeld 11(DE)**
Erfinder: **Buxbaum, Gunter Dr.**
**Holzapfelweg 2**
**D-4150 Krefeld 1(DE)**

(54) **Verfahren zur Herstellung feinteiliger Bariumhexaferritpigmente aus Halogenidschmelzen sowie die Verwendung derartig hergestellter Bariumhexaferritpigmente.**

(57) Die vorliegende Erfindung betrifft ein Verfahren zur Herstellung feinteiliger magnetischer Hexaferritpigmente der allgemeinen Zusammensetzung:

$M(I)_x M(II)_y M(III)_z Fe_{12-(y+z)} O_{19}$ wobei $0 <= x <= 3$, $0,1 <= (y+z) <= 3$, $(x+y+z) >= 1,0$

M(I) = Ba, Sr, Ca, Eu, Pb oder eine Kombination von RE und einwertigen Kationen der Gruppe Li, Na, K, Rb, Cs, Ag, Tl und RE = La, Y, Sc, Bi oder andere Seltenerdmetalle ist und

M(II) = Fe(II), Mn, Co, Ni, Zn, Cu, Cd, Mg, Sn(II) und

M(III) = Ti, Zr, Hf, Ga, Sn(IV), Ge, In, Sc, Nb, Ta, V, As, Sb, Bi, Al, Cr(III), Mo, W,

wobei eine Vorläuferverbindung durch Zersetzung organischer Verbindungen gewonnen wird, diese mit einer Salzmischung versetzt wird und bei einer Temperatur von 700 bis 1.000°C geglüht wird, wobei der fertige Ferrit entsteht und aus dieser Mischung der Ferrit durch Auslaugen mit Wasser gewonnen wird.

EP 0 297 392 A2

# Verfahren zur Herstellung feinteiliger Bariumhexaferritpigmente aus Halogenidschmelzen sowie die Verwendung derartig hergestellter Bariumhexaferritpigmente

Die vorliegende Erfindung betrifft ein Verfahren zur Herstellung feinteiliger magnetischer Hexaferritpigmente der allgemeinen Zusammensetzung:

$M(I)_x M(II)_y M(III)_z Fe_{12-(y+z)} O_{19}$ wobei $0 <= x <= 3$, $0,1 <= (y+z) <= 3$, $(x+y+z) >= 1,0$

M(I) = Ba, Sr, Ca, Eu, Pb oder eine Kombination von RE und einwertigen Kationen der Gruppe Li, Na, K, Rb, Cs, Ag, Tl und RE = La, Y, Sc, Bi oder andere Seltenerdmetalle ist und

M(II) = Fe(II), Mn, Co, Ni, Zn, Cu, Cd, Mg, Sn(II) und

M(III) = Ti, Zr, Hf, Ga, Sn(IV), Ge, In, Sc, Nb, Ta, V, As, Sb, Bi, Al, Cr(III), Mo, W

bedeuten, sowie die Verwendung derartig hergestellter Bariumhexaferritpigmente in magnetischen Auszeichnungsmedien.

Hexaferrite weisen Koerzitivfeldstärken auf, wie sie für die hochdichte magnetische Speicherung benötigt werden (45 - 120 KA/m). Sie sind Metallpigmenten in ihrer Korrosionsstabilität und $CrO_2$ und Co-dotierten Eisenoxidpigmenten in ihrer Thermostabilität überlegen. Derartige Hexaferritpigmente mit Magnetoplumbit(M)- oder W-Struktur wurden für diese Zwecke vorgeschlagen. Zur Senkung der Koerzitivkraft feinteiliger reiner Barium-, Strontium- oder Bleihexaferrite wird üblicherweise mit Co-und Ti-Ionen dotiert.

Bisher sind verschiedenste Verfahren zur Herstellung derartiger Hexaferrite bekannt geworden. Bei dem Verfahren der Mischfällung, wie sie in der US-A 4 120 807 beschrieben wird, geht man von Lösungen von Metallsalzen aus, die durch NaOH oder $Na_2CO_3$ oder ähnliche Fällungsmittel gefällt werden.

Nachteil derartiger Verfahren ist die im allgemeinen schlechte Reproduzierbarkeit der Mischfällung, was auf die unterschiedlichen Hydrolysekonstanten der einzelnen Komponenten zurückzuführen ist. Aus DE-A 2 832 892 ist ein Verfahren zur Herstellung von feinteiligen Hexaferriten durch Versprühen von Nitratlösungen der Komponenten in einem Sprühturm bei 1.200° C bekannt. Das auf diese Weise hergestellte Ferritpulver ist jedoch stark versintert und mit Hämatit verunreinigt.

In der US-A 3 793 443 wird die Herstellung eines Bariumferrits durch Erhitzen eines $BaCO_3$-FeOOH-NaCl-KCl-Ge-mischs beschrieben. Dabei wird als wichtig angesehen, daß von FeOOH ausgegangen wird, um die Ferritbildung in Gegenwart des dabei freiwerdenden Wassers durchzuführen. Außerdem wird die Ferritbildung nur bei hohen Temperaturen weit oberhalb des Schmelzpunkts der Alkalichloridmischung beobachtet. Hierbei fallen nur relativ grobe Hexaferritteilchen an.

Nach dem aus der US-A 3 810 973 bekannten Verfahren wird eine Suspension von Eisen(III)-oxidhydrat in einer Alkalichloridlösung mit $BaCO_3$-Pulver versetzt und dann sprühgetrocknet und bei 1.000 bis 1.050° C geglüht. Auch hierbei werden nur grobe Hexaferritteilchen erhalten.

In dem australischen Patent AU-A-2 84 335 wird die Herstellung von Hexaferriten aus einem Gemisch von Eisenoxid, $BaCO_3$ und eines Salzes bei 850 bis 1.000° C beschrieben. Als Salze werden Halogenide, insbesondere Fluoride oder Chromate der Metalle der Gruppen IA, IIA, IIIA, IVA, des Periodensystems der Elemente oder Cu eingesetzt. Dieses Verfahren führt zu unregelmäßigen groben Hexaferriten.

In DE-A 3 042 959 wird ein Verfahren zur Herstellung von Hexaferriten durch Mischfällung von Chloriden mit $Na_2CO_3$ beschrieben, daß zu ausreichend feinteiligen Hexaferriten führt. Ein ähnliches Verfahren, das zu Teilchen mit einem Durchmesser/Dicke-Verhältnis von 10:1 bei Teilchendurchmesern von 0,1 bis 0,3 μm führt, wird in EP-A 0 039 773 beschrieben. Weiterhin ist die Herstellung derartiger Bariumferrite durch hydrothermale Verfahren, wie in US-A 4 585 568 beschrieben, möglich. Nachteil derartiger Verfahren sind jedoch hohe Verfahrenskosten und geringer Durchsatz.

Ein weiteres Verfahren geht von anorganischen Gläsern aus. Dieses in der US-A 4 341 648 beschriebene Verfahren, nach dem geeignete Hexaferrite erhalten werden können, zeichnet sich jedoch durch sehr hohe Verfahrenskosten, bedingt durch die hohen Schmelztemperaturen, und durch Korrosionsprobleme durch die borhaltige Schmelze aus. Desweiteren ist das Verfahren nicht leicht zu beherrschen. Daneben sind einige weitere Verfahren bekanntgeworden, von denen jedoch keines derzeit zur Darstellung feinteiliger Bariumhexaferrite einer definierten Teilchengröße und Form geeignet erscheint.

Die oben erwähnten Verfahren zur Herstellung von Hexaferriten aus Salzschmelzen, durch hydrothermale Behandlung oder aus anorganischen Gläsern führen in der Regel zu Hexaferriten einer bestimmten Große und Form. Sie sind jedoch nicht in der Lage, Teilchen mit sehr unterschiedlichen Formen zu liefern, sonder führen in allen Fällen zu mehr oder weniger ausgeprägten Plättchen. Um ein isotropes Aufzeichnungsverfahren ausüben zu können oder für Längsaufzeichnung, werden Teilchen benötigt, die sich auch in Längsrichtung gut orientieren lassen.

Es ist also das Ziel der vorliegenden Erfindung, ein preiswertes durchführbares Verfahren zu entwickeln, daß zu geeigneten feinteiligen Hexaferriten einer definierten und steuerbaren Größe und Form führt.

Diese feinteiligen Hexaferritpigmente sollen eine definierte Form und Größe aufweisen, so daß diese sowohl für Längsaufzeichnung als auch für Senkrechtaufzeichnung geeignet sind. Ein derartiges Verfahren, das sowohl plättchenförmige als auch isometrische Hexaferritteilchen liefert, ist derzeit nicht bekannt.

Fluxverfahren mit Halogeniden führen in der Regel zu ausgeprägt plättchenförmigen Teilchen. Überraschenderweise wurde jedoch gefunden, daß durch Zersetzung organischer Verbindungen und Tempern der entstandenen feinteiligen Oxide und Carbonate in einem Gemisch von Alkali- und Erdalkalihalogeniden sowohl feinteilige Hexaferrite mit einem Durchmesser zu Dickeverhältnis von 1:1 als auch solche mit einem Durchmesser zu Dickeverhältnis von 5:1 bis 20:1 hergestellt werden können. Dies schieht durch Zersetzung von entsprechenden Metallsalzen organischer Verbindungen in Gegenwart oberflächenaktiver Substanzen bei erhöhter Temperatur unter oxidierenden Bedingungen.

Gegenstand der Erfindung ist somit ein Verfahren zur Herstellung feinteiliger magnetischer Hexaferrite der allgemeinen Zusammensetzung:

$M(I)_x M(II)_y M(III)_z Fe_{12-(y+z)} O_{19}$ wobei $0 <= x <= 3$, $0,1 <= (y+z) <= 3$, $(x+y+z) >= 1,0$

M(I) = Ba, Sr, Ca, Eu, Pb oder eine Kombination von RE und einwertigen Kationen der Gruppe Li, Na, K, Rb, Cs, Ag, Tl und RE = La, Y, Sc, Bi oder andere Seltenerdmetalle ist und

M(II) = Fe(II), Mn, Co, Ni, Zn, Cu, Cd, Mg, Sn(II) und

M(III) = Ti, Zr, Hf, Ga, Sn(IV), Ge, In, Sc, Nb, Ta, V, As, Sb, Bi, Al, Cr(III), Mo, W,

wobei

a) eine Vorläuferverbindung durch Zersetzung organischer Verbindungen gewonnen wird, diese mit

b) einer Salzmischung versetzt wird und bei einer Temperatur von 700 bis 1.000 °C geglüht wird wobei der fertige Ferrit entsteht,

c) aus dieser Mischung der Ferrit durch Auslaugen mit Wasser gewonnen wird.

Besonders bevorzugt werden als Metallsalze komplexe Verbindungen von Hydroxycarbonsäuren der entsprechenden Metalle gegebenenfalls zusammen mit Ammoniumionen eingesetzt.

Eine besonders bevorzugte Ausführungsform des erfindungsgemäßen Verfahrens besteht darin, daß als Metallsalze solche der Zusammensetzung $NH_4(Me_n An_m)^.pH2O$ eingesetzt werden (n = 0,21 bis 0,5 für Me = Fe; m = 0,27 bis 0,43 für An = $C_6H_4O_7$ und p = 0,04 bis 1,5), wobei An das Anion einer Hydroxycarbonsäure ist und Me das durch die gewünschte Zusammensetzung vorgegebene Metallion ist.

Besonders bevorzugt wird als Hydroxycarbonsäure die Citronensäure eingesetzt. Es hat sich als vorteilhaft erwiesen den pH-Wert auf einen sauren Bereich (pH 0,5 bis 6,5) einzustellen. Eine besonders bevorzugte Ausführungsform des erfindungsgemäßen Verfahrens, bei dem die Metallsalze der organischen Verbindung in Gegenwart oberflächenaktiver Substanzen auf 80 bis 180 °C zur Bildung einer glasartigen Vorläuferverbindung umgesetzt und diese anschließend auf die dem thermodynamischen Existenzbereich des entsprechenden Hexaferrits entsprechenden Temperatur erhitzt wird.

Gegebenenfalls kann sich eine Behandlung der Reaktionsprodukte mit einer Säure, beispielsweise Essigsäure, Ameisensäure oder Citronensäure, als günstig erweisen, was in einer Erhöhung der Sättigungsmagnetisierung ihren Ausdruck findet. Eine Naßmahlung oder eine Trockenmahlung, die mit der Säurebehandlung kombiniert wird, kann ebenfalls durchgeführt werden und verbessert die Dispergierbarkeit des Produkts.

Der Vorteil des erfindungsgemäßen Verfahrens besteht darin, daß die Lösung der Salze der Hydroxycarbonsäuren absolut homogen auf atomarem Niveau sind, so daß ein extrem homogenes feinteiliges Produkt entsteht. Zur Herstellung der erfindungsgemäßen Hexaferrite geht man zweckmäßigerweise von den wäßrigen Lösungen der Metallsalze der Hydroxycarbonsäuren aus. Die Lösungen können aus festen Salzen der Hydroxycarbonsäuren oder aus Oxiden, Hydroxiden, Carbonaten, Oxydhydroxiden, Oxyhydraten oder den Elementen selbst durch Umsetzung mit den entsprechenden Hydroxycarbonsäuren hergestellt werden.

Die Temperatur zur Herstellung dieser Lösungen beträgt 20 bis 90 °C. Die Konzentration der Salze liegt in den wäßrigen Lösungen zwischen 1 und 50 Gew.-%. Als Hydroxycarbonsäuren können eingesetzt werden:
Citronensäure, Glykolsäure, Milchsäure, Weinsäure, Apfelsäure und andere Hydroxycarbonsäuren. Bis zu 50 % der Hydroxycarbonsäuren können durch andere Carbonsäuren wie Ameisensäure und Essigsäure ersetzt werden.

Der Zusatz eines Netzwerkbildners verbessert die Eigenschaften des Produkts entscheidend. Als oberflächenaktive Netzwerkbildner kommen infrage: Alkohole, einfache, mehrfunktionelle oder polymere; Fettsäuren, deren Salze, Ester und Amide; Polyether; Amine; Polyamine; Amide; Polyamide; polymere ungesättigte Carbonsäuren; Lactone; Ketone; Ketale; Acetale und Aldehyde mit mehreren funktionellen Gruppen, vorzugsweise 1 bis 5 und quarternäre Ammoniumsalze. Ebenso können Si-organische Verbindungen wie Siliconöle, -harze oder -ester oder phosphororganische Verbindungen wie Phosphorsäureester oder Phosphonosäuren diese Funktion übernehmen.

Anstelle der Kombination einer Hydroxycarbonsäure und einer oberflächenaktiven Substanz können auch teilweise veresterte Hydroxycarbonsäuren, wobei als Alkohole die obengenannten eingesetzt werden können, verwandt werden.

Das Eindampfen der wäßrigen Lösungen kann durch konventionelle Techniken wie Eindampfen, Gefriertrocknen, Sprühtrocknen oder Destillation geschehen. Die hierbei entstehende glasartige Vorläuferverbindung läßt sich leicht in konventionellen Mühlen mahlen. Bei der Pyrolyse der glasartigen Vorläuferverbindung bei Temperaturen zwischen 160°C und 1.000°C entsteht ein Gemisch aus ultrafeinen Oxiden und Carbonaten der entsprechenden Metalle, das bei Temperaturen, die zur Bildung des entsprechenden Hexaferrits notwendig sind, zu einem feinteiligen Hexaferrit führt. Die Pyrolyse und anschließende Temperung wird in Gegenwart von molekularem Sauerstoff in Kammeröfen, Wirbelschichtöfen oder Drehrohröfen durchgeführt.

Eine bevorzugte Ausführungsform besteht darin, daß die konzentrierte zähflüssige Lösung der Metallsalze der Hydroxycarbonsäuren bei 160°C bis 400°C in einem Schritt getrocknet und in Gegenwart von molekularem Sauerstoff pyrolisiert wird. Das hierbei entstehende Produkt wird dann mit dem 1- bis 10fachen des Gewichts an einer Mischung aus Chloriden der Alkalimetalle und der Erdalkalimetalle versetzt. Diese Mischung wird in einem Kammerofen oder einem Drehrohrofen bei der notwendigen Temperatur um den Ferrit zu erhalten erhitzt. Nach dem Abkühlen der Mischung wird der Salzflux durch Auslaugen mit Wasser entfernt. Eine besonders bevorzugte Ausführungsform des erfindungsgemäßen Verfahrens besteht darin, daß 2 bis 4 Teile einer Mischung aus 0 bis 50 Mol-% $BaCl_2$ und entsprechend 100 bis 50 Mol-% NaCl mit einem Teil des Vorprodukts gemischt werden und bei 800°C bis 900°C 45 Minuten bis 120 Minuten geglüht werden.

Die anschließende Säurebehandlung, die nicht zwingend notwendig ist, erfolgt vorzugsweise mit 10 %iger Säure (Essigsäure, Ameisensäure, Citronensäure oder einer anderen Säure, die den Ferrit nicht löst). Vorzugsweise wird 1 bis 3 Stunden bei 20°C bis 100°C gearbeitet. Besonders bevorzugt wird eine Naßmahlung in einer Rührwerkkugelmühle in der entsprechenden Säure vorgenommen.

Die besonderen Vorteile des erfindungsgemäßen Verfahrens liegen in seiner enormen Flexibilität, so daß eine Vielzahl verschiedener hexagonaler Ferrite hergestellt werden kann. Des weiteren ist die bevorzugte Ausführungsform, bei der Eisencitrat oder Ammoniumeisencitrat mit Metallcarbonaten, Oxiden oder Hydroxiden umgesetzt wird, besonders einfach und flexibel. Weiterhin kann von reinen Ausgangsstoffen ausgegangen werden, die bei den Operationen nicht mit Hilfschemikalien verunreinigt werden, so daß man zu hochreinen exakt stöchiometrischen Produkten gelangt.

Ein besonderer Vorteil des erfindungsgemäßen Verfahrens besteht darin, daß man durch Variation der Salzmischung leicht feinteilige Hexaferritpigmente mit Durchmesser zu Dickeverhältnissen von 1:1 bis 20:1 herstellen kann.

Aufgrund ihrer hervorragenden Eigenschaften sind die erfindungsgemäßen feinteiligen magnetischen Hexaferrite besonders geeignet für den Einsatz in magnetischen Aufzeichnungsmedien. Gegenstand dieser Erfindung ist somit insbesondere die Verwendung dieser Hexaferritpigmente in magnetischen Aufzeichnungträgern.

Die folgenden Beispiele sollen die Erfindung verdeutlichen, ohne sie jedoch einzuschränken, insbesondere wird der Fachmann durch Variation der Menge und der Art der Metallionen und der Herstellungsbedingungen im Rahmen dieser Erfindung jede gewünschte Zusammensetzung mühelos erhalten können.

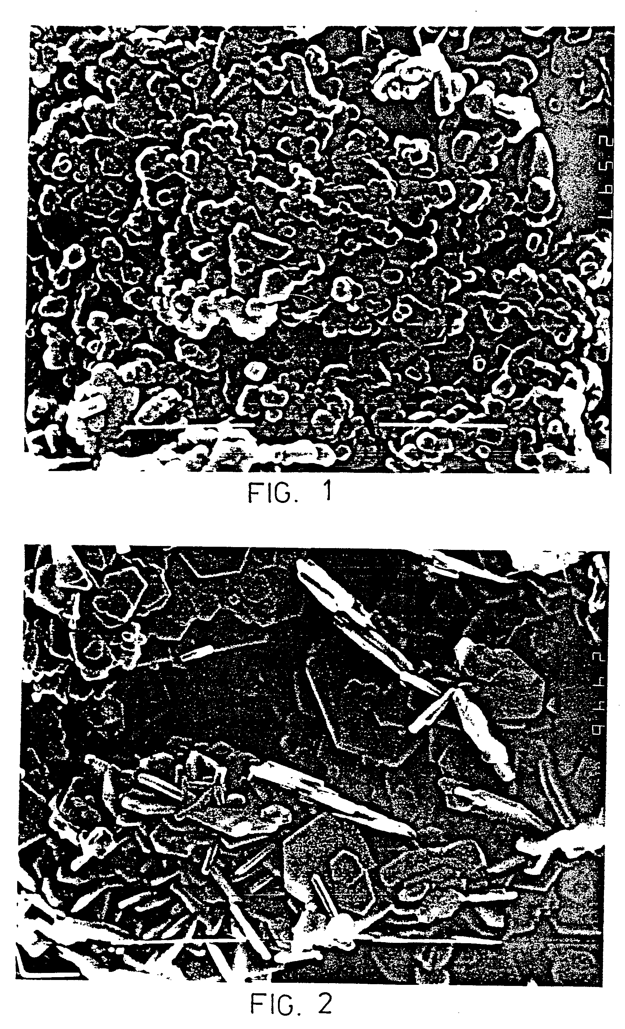

Fig. 1 zeigt eine elektronenmikroskopische Aufnahme der erfindungsgemäßen Bariumhexaferrite mit einem Durchmesser zu Dickeverhältnis von 1:1.

Fig. 2 zeigt einen entsprechenden Bariumhexaferrit mit einem Durchmesser zu Dickeverhältnis von 10:1.

Beispiel 1

Herstellung von $Ba_{1,1}Co_{0,85}Ti_{0,85}Fe_{10,3}O_{19}$

7,1 kg Ammoniumeisen(III)citrat (16,90 % Fe), 0,781 kg Citronensäure werden in 12,817 kg Wasser gelöst und auf 80°C erhitzt. Dann werden 0,457 kg $BaCO_3$ und 0,2297 kg $CoCO_3$ (45,5 % Co) zugegeben. Zu dieser Lösung werden 1,036 Kg TiO-Citrat (8,20 % Ti) und 1,3 kg Ethandiol gegeben. Diese Lösung wird eine Stunde bei obiger Temperatur gehalten und dann wird mit einem Rotationsverdampfer soviel Wasser verdampft, daß eine Lösung mit einem Eisengehalt von 9,5 % entsteht. Diese Lösung wird in einem Kammerofen bei 350°C Ofentemperatur unter Luftbegasung zersetzt. Hierbei entstehen 5,035 kg eines Vorprodukts. 100 g dieses Vorprodukts werden mit 400 g NaCl gemischt und 60 Minuten bei 825°C geglüht. Das Salz wurde durch Auslaugen mit Wasser entfernt. Es entstand ein feinteiliger Bariumhexaferrit mit folgenden Eigenschaften:

Teilchengröße:   0,1 bis 0,2 μm

spez. Oberfläche: 16,2 m²/g
Durchmesser/Dicke: 1:1 bis 2:1
$_iH_c$: 81,88 kA/m
$M_s$/rho: 60,2 nTm³/g

Die Teilchengröße wurde aus rasterelektronenmikroskopischen Aufnahmen bestimmt. Die spezifische Oberfläche wurde nach der BET-Methode (1-Punkt) mit Stickstoff als Meßgas gemessen. Koerzitivkraft und Sättigungsmagnetisierung wurden bei 421,67 kA/m Meßfeldstärke bestimmt.

### Beispiel 2

100 g des Vorprodukts aus Beispiel 1 wurden mit 400 g einer Mischung aus 5 Mol-% BaCl₂ und 95 Mol-% NaCl gemischt und 60 Minuten bei 900°C geglüht und wie oben weiter behandelt.

Der erhaltene Bariumhexaferrit hatte folgende Eigenschaften:
Teilchengröße: 0,1 bis 0,3 µm
spez. Oberfläche: 12,7 m²/g
Durchmesser/Dicke: 3:1 bis 2:1
$_iH_c$: 66,84 kA/m
$M_s$/rho: 67,8 nTm³/g
Meßbedingungen wie unter Beispiel 1.

### Beispiel 3

100 g des Vorprodukts aus Beispiel 1 wurden mit 800 g einer Mischung aus 10 Mol-% BaCl₂ und 90 Mol-% NaCl gemischt und 60 Minuten bei 900°C geglüht und wie in Beispiel 1 weiter behandelt.

Es entstand ein Bariumhexaferrit mit folgenden Eigenschaften:
Teilchengröße: 0,2 bis 0,3 µm
spez. Oberfläche: 17,1 m²/g
Durchmesser/Dicke: 7:1 bis 10:1
$_iH_c$: 49,57 kA/m
$M_s$/rho: 69,8 nTm³/g
Meßbedingungen wie unter Beispiel 1.

### Beispiel 4

100 g des Vorprodukts aus Beispiel 1 wurden mit 400 g einer Mischung aus 30 Mol-% BaCl₂ und 70 Mol-% NaCl gemischt und 60 Minuten bei 800°C geglüht und weiter wie in Beispiel 1 behandelt.

Es enstand ein Bariumhexaferrit mit folgenden Eigenschaften:
Teilchengröße: 0,2 bis 0,4 µm
spez. Oberfläche: 29 m²/g

Durchmesser/Dicke: 10:1 bis 15:1
$_iH_c$: 22,28 kA/m
$M_s$/rho: 59,5 nTm³/g
Meßbedingungen wie unter Beispiel 1.

### Beispiel 5

100 g des Vorprodukts aus Beispiel 1 wurden mit 800 g einer Mischung aus 30 Mol-% BaCl₂ und 70 Mol-% KCl gemischt und 60 Minuten bei 800°C geglüht und weiter wie in Beispiel 1 behandelt.

Es entstand ein Bariumhexaferrit mit folgenden Eigenschaften:
Teilchengröße: 0,2 bis 0,4 µm
spez. Oberfläche: 33 m²/g
Durchmesser/Dicke: 10:1 bis 15:1
$_iH_c$: 49,25 kA/m
$M_s$/rho: 51,4 nTm³/g
Meßbedingungen wie unter Beispiel 1.

### Beispiel 6

100 g des Vorprodukts aus Beispiel 1 wurden mit 400 g einer Mischung aus 5 Mol-% BaCl₂ und 95 Mol-% NaCl gemischt und 60 Minuten bei 900°C geglüht und weiter wie in Beispiel 1 behandelt.

Es entstand ein Bariumhexaferrit mit folgenden Eigenschaften:
Teilchengröße: 0,2 bis 0,4 µm
spez. Oberfläche: 23 m²/g
Durchmesser/Dicke: 10:1 bis 15:1
$_iH_c$: 30,60 kA/m
$M_s$/rho: 70,1 nTm³/g
Meßbedingungen wie unter Beispiel 1.

## Ansprüche

1. Verfahren zur Herstellung feinteiliger magnetischer Hexaferrite der allgemeinen Zusammensetzung:

$M(I)_x M(II)_y M(III)_z Fe_{12-(y+z)}O_{19}$ wobei $0 <= x <= 3$, $0,1 <= (y+z) <= 3$, $(x+y+z) >= 1,0$

M(I) = Ba, Sr, Ca, Eu, Pb oder eine Kombination von RE und einwertigen Kationen der Gruppe Li, Na, K, Rb, Cs, Ag, Tl und RE = La, Y, Sc, Bi oder andere Seltenerdmetalle ist und

M(II) = Fe(II), Mn, Co, Ni, Zn, Cu, Cd, Mg, Sn(II) und

M(III) = Ti, Zr, Hf, Ga, Sn(IV), Ge, In, Sc, Nb, Ta, V, As, Sb, Bi, Al, Cr(III), Mo, W,
dadurch gekennzeichnet, daß

a) eine Vorläuferverbindung durch Zersetzung organischer Verbindungen gewonnen wird, diese mit

b) einer Salzmischung versetzt wird und bei einer Temperatur von 700 bis 1.000 °C geglüht wird wobei der fertige Ferrit entsteht,

c) aus dieser Mischung der Ferrit durch Auslaugen mit Wasser gewonnen wird.

2. Verfahren zur Herstellung feinteiliger magnetischer Hexaferritpigmente gemäß Anspruch 1, dadurch gekennzeichnet, daß als Metallsalze komplexe Verbindungen von Hydroxycarbonsäuren der entsprechenden Metalle gegebenenfalls zusammen mit Ammoniumionen eingesetzt werden.

3. Verfahren gemäß Anspruch 1, dadurch gekennzeichnet, daß als Metallsalze solche der Zusammensetzung $NH_4(Me_nAn_m)_xpH_2O$ (wobei $n = 0,21$ bis $0,5$, für $Me = Fe$; $m = 0,27$ bis $0,43$ für $An = C_6H_4O_7$ und $p = 0,04$ bis $1,5$ ist) eingesetzt werden, wobei An das Anion einer Hydroxycarbonsäure und Me die durch die gewünschte Zusammensetzung des Hexaferrits vorgegebenen Metallionen sind.

4. Verfahren gemäß einem der Ansprüche 2 oder 3, dadurch gekennzeichnet, daß die Hydroxycarbonsäure Citronensäure ist.

5. Verfahren gemäß einem der Ansprüche 1 bis 4, dadurch gekennzeichnet, daß die Vorläuferverbindung mit 1 bis 10 Teilen einer Salzmischung aus Halogeniden der Metalle der Alkali- oder Erdalkaligruppe versetzt werden.

6. Verfahren gemäß einem der Ansprüche 1 bis 5, dadurch gekennzeichnet, daß als besonders bevorzugt eine Mischung aus NaCl und $BaCl_2$ mit 0 bis 50 Mol-% $BaCl_2$ eingesetzt wird.

7. Verwendung der magnetischen Hexaferritpigmente gemäß einem der Ansprüche 1 bis 6, als magnetisches Aufzeichnungsmaterial.

FIG. 1

FIG. 2